# EUROPEAN PATENT APPLICATION

(11) **EP 1 465 391 A1**
(43) Date of publication of application: **06.10.2004**
(21) Application number: 03007592.3
(22) Date of filing: 02.04.2003
(51) Int. Cl.: H04M 1/02, H05K 5/03

(54) **A cover for electronic equipment with a rubber band**

(71) Applicant: Sony Ericsson Mobile Communications AB, 221 88 Lund (SE)
(72) Inventor: Olsson, Mats, 214 31 Malmö (SE)
(74) Representative: Dahnér, Christer

(57) **Abstract**

Cover for electronic equipment, said cover (20) comprising a front panel (25) and a rear panel (26), said cover (20) being removably attachable to a housing comprising functional components, for instance to enable communication to take place, wherein said cover (20) comprises joining means (30) including an elongate recess (31) on an outer surface (31a) thereof and an endless elastic wire-like locking member (32) adapted to run in said recess (31), said locking member (32) being arranged to join the cover (20) by elastic force. The invention also relates to an electronic equipment comprising such a cover.

## Description

### TECHNICAL FIELD OF THE INVENTION

The present invention relates to a cover for electronic equipment. In particular, the present invention relates to a cover comprising joinable front and rear panels for portable electronic equipment.

Portable electronic equipment such as cellular phones is conventionally produced by assembling functional elements such as telephone circuitry, including transceiver circuitry and user interface components provided within and/or at a body (also sometimes referred to as "housing") to a cover comprising one or more panels. The cover typically comprises a front panel and a rear panel, which are joined to each other, surrounding the body, or a front panel attachable to the body comprising a thereto fixed rear panel. The front panel typically comprises holes for user interface components such as display and buttons.

The panels are typically joined to each other (or to the body) by means of fastening means such as screws and/or snap fittings. Screws, for instance, are normally space consuming, and limits the design of the cover, since they typically must be accessible for assembling/disassembling of the panels, thereby limiting freedom of design due to mechanical requirements. Moreover, typically assembling covers by means of screws are time consuming in production, which increases cost of electronic equipment before reaching a customer. Snap fittings, for instance, typically are provided as a male part and a female part thereof that are engaged by forcing the two parts to engage. Because of that, depending on design, the snap fittings can be more or less easy to engage or disengage. If an objective is to have a tight and rigid fitting, it is normally hard to disassemble, and vice versa. Furthermore, snap fittings normally require multiple parts that interact with each other. Typically such parts are time consuming to design (expensive), often requiring special tools for manufacturing thereof.

Today distinguishing the appearance of electronic equipment, in particular portable electronic equipment, such as cellular phones, PDAs etc has become an important need for many users. Often a user desires a distinguished appearance to meet his or her personal taste and preference instead of a standard appearance. For instance, this can be provided by a front panel having a distinguished appearance. Different front panels, which can be selectable by a user, could then provide a variety of distinguished looks for instance by having different texture or colour. A distinguished looking front panel can then be selected to create a customized portable electronic equipment. However, this normally requires that the front panel (or the entire cover) can easily be fastened or unfastened from the rear panel or the body. Furthermore, assembling/disassembling is often repeated many times, which may reduce the operating time of the fastening means considerably, often implying that the whole electronic equipment must be changed to new equipment, since it is often very expensive or even impossible to repair worn out built-in fastening means such as snap fittings. This is of course not desirable.

Accordingly, there is a need for a cover comprising fastening means that overcomes the disadvantages with prior art fastening means, as described above. In particular, there is a demand for a cover comprising fastening means that could be more easily assembled/disassembled than prior art fastening means for attaching a cover to an electronic equipment that do not suffer from the drawbacks described above.

### SUMMARY

It is an object of the invention to provide a cover for electronic equipment, which cover can easily be assembled/disassembled.

Herein, the term "cover" relates to a cover for electronic equipment, as well as any accessory cover. Any type of cover, such as a two part cover including a front panel and a back panel, a front panel cover, a pocket-like cover or other for electronic equipment suitable cover, is included within the term without departing from the invention.

An aspect of the invention is to provide a cover, in particular a cover comprising a front panel and a back panel, comprising means for joining the panels, which cover can easily be assembled/disassembled.

Herein, the term "joining" is referred to as joining two or more parts of any type, typically a cover comprising two panels, but is not limited thereto. The term "joining" also means fastening a cover to a body, for instance fastening a front panel (a cover) to a body, typically a body comprising circuitry, buttons, display etc.

According to a preferred embodiment of the invention there is provided a cover for electronic equipment, said cover preferably comprising a front panel and a rear panel, said cover being removably attachable to a housing comprising functional components, for instance to enable communication to take place, wherein said cover comprises joining means including an elongate recess on an outer surface of the cover and an endless elastic wire-like locking member adapted to run in said recess, said locking member being arranged to join and/or attach the cover by elastic force.

Preferably, the locking member is an elastic wire, typically a rubber wire.

Preferably, the polymer material comprises thermoplastic material, in particular thermoplastic elastomeric material (TPE).

Preferably, the material comprises colour particles.

Preferably, the locking member has a flattened out region comprising a label such as a logotype.

According to another preferred embodiment of the invention, there is provided an electronic equipment comprising a cover, for electronic equipment, said cover comprising a front panel and a rear panel, said cover being removably attachable to a housing comprising functional components, for instance to enable communication to take place, wherein said cover comprises an elongate recess on an outer surface thereof and an endless elastic wire-like locking member adapted to run in said recess, said locking member being arranged to join the cover by elastic force, wherein the recess for the locking member is provided in a loudspeaker region of the electronic equipment.

Preferably, the recess for the locking member is provided below a key-board of the electronic equipment.

Preferably, the locking member and/or the recess is/are adapted so that the locking member is closer attached to one of the panels to prevent that it is accidently lost when handling the equipment.

An advantage of the present invention is a robust design, whereby exact fitting or tight relationship of panels is not required. The invention is easy to use and understand for a user. Since the cover comprising the locking member according to the invention is simple, tool costs can be reduced compared to what is required for prior art tools.

Another advantage of the present invention is that the device could also be provided to absorb mechanical shocks to prevent the electronic equipment from damage, for instance when dropped.

### BRIEF DESCRIPTION OF DRAWING FIGURES

A better understanding of the present invention will be accomplished upon review of the following detailed description of embodiments thereof, when considered in conjunction with accompanying drawing figures, wherein:
Fig. 1 is an exploded perspective view of an electronic equipment, herein a cellular phone, comprising a cover according to a preferred embodiment of the invention, about to be assembled (illustrated with arrows pointing towards a body).
Fig. 2 is a detail view of the assembled electronic equipment illustrated in Fig. 1 provided with the cover.
Figs. 3a-c illustrate different cross-sections of different locking members according to various preferred embodiments of the invention.

### DETAILED DESCRIPTION OF EMBODIMENTS

As required, detailed embodiments of the present invention are disclosed herein; however, it is to be understood that the disclosed embodiments are merely examples of the invention that may be further embodied in various and alternative forms other than described below. The drawings are not necessarily to scale, and some mechanisms may be exaggerated or minimized to show details of particular components or features. Therefore, specific structural and functional details disclosed herein are not to be interpreted as limiting in any sense, but merely as a basis for the claims and as a representative basis for enabling one skilled in the art to variously put the present invention into practice.

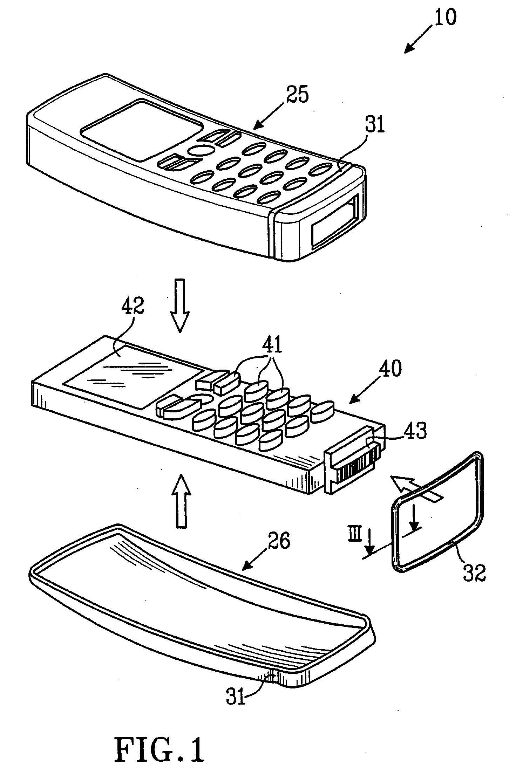

Now is referred to the drawing figures and, initially, to Fig. 1, which illustrates an electronic equipment 10, in this case a cellular phone, a front panel 25 and a rear panel 26 provided with a joining means 30 including an elongate recess 31, herein a groove, a locking member 32, herein an endless elastic wire shown in a non-tensioned mode, for joining the front panel 25 and the rear panel 26 to enclose a body 40 comprising elements for communication such as circuitry (not shown), keyboard 41, and display 42. In this figure, only one joining means 30 is shown; however, there may be more than one and/or the cover could also be provided with additional conventional joining means, for instance in one end thereof and the inventive joining means 30 in another end thereof.

In Fig. 1, the electronic equipment 10 is shown in a mode just about to be assembled (illustrated by arrows pointing towards the body 40. However, this figure could also be employed to illustrate a situation when the electronic equipment 10 is disassembled, typically by arrows pointing in opposite direction, even if this is not shown, since it is obvious for a person skilled in the art.

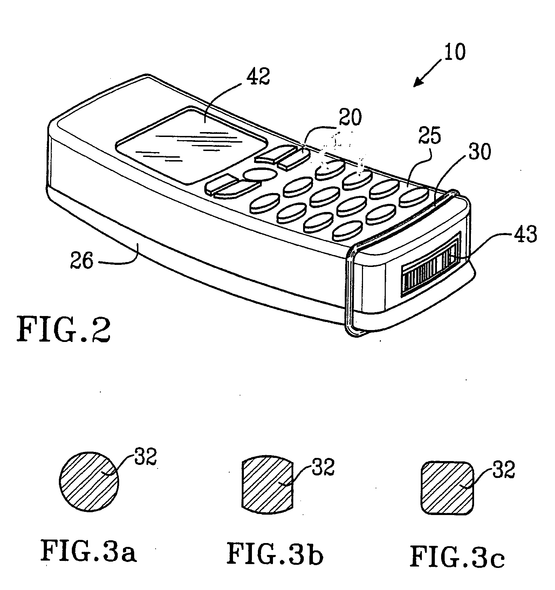

Fig. 2 illustrates the same electronic equipment 10 as illustrated in Fig. 1 but in an assembled state. The front panel 25 and the rear panel 26 are now joined to form a cover 20 enclosing the body (of which only part of the display 42 and charging/communication input/output 43 are shown in more detail). Herein, the term "enclosing" does not necessarily mean totally enclosing, but any form of partial enclosing is also meant to be comprised within this term.

The cover 20 is joined by means of the joining means 30, which joining means 30 in this particular example includes the elastic wire 32 running in the recess 31 of the cover 20. Since the length of the elastic wire 32 in a non-tensioned mode is shorter than the length of the recess 31 running around the cover 20 in its shortest length, a force (not shown) presses the front panel 25 against the rear panel 26 by means of elastic force. Herein, the term "recess" is not limited to a recess in the form of a groove as illustrated in the figure, but any type of guiding rail that could hold the locking member 32 in position could be employed without departing from the invention.

Moreover, the position of the recess 31 is not limited to just below the keyboard 41, but any suitable position such as the loudspeaker region (not shown) or both could be employed.

The invention is not limited to any particular number of locking members 32 and corresponding recesses 31 or their positions. For instance two or more could be employed if appropriate. Also the shape of the locking member 32 and corresponding recess 31 could be any suitable. This is illustrated in more detail in Fig. 3a-c which shows different cross-sections of the locking member 32. Preferably, the locking member 32 has circular cross-section; however not over its entire length, of which a part is preferably flattened out to obtain an area on which a label could be provided. It is also possible, and often preferred, to mould (emboss) a logotype or text directly in the material of the locking member 32.

Typically, the front panel and the rear panel are attached to the body by means of conventional fastening means, for instance of hinge-type, (not shown) in one end thereof, i. e. the end opposite the end where the recess is located. In such a case this end is first joined before the locking member is applied in its locking position. For opening, i. e. disassembling the cover, the user simply removes the elastic locking member, whereby the cover comes loose.

Preferably, the elastic locking member and/or the recess is/are adapted so that the locking member is closer attached to one of the panels to prevent that it is accidently lost when handling the electronic equipment (in this case the cellular phone).

By means of the invention, fastening means such as snap fittings can be avoided. This is a great advantage since snap fittings typically require two separate plastic parts to interact with each other. This is typically time consuming to design and implies high tool cost. Often tedious modification of the tools is required to obtain a proper function of the fitting. All of this could be solved by using the present invention.

Typically, the locking member in the form of an elastic wire is cheap to manufacture, since simple tools are required. The elastic wire could also by used as decoration item by changing its appearance, for instance colour, label (logotype), surface structure, shape etc. For instance a more "sporty" appearance, a more robust design is easily provided; however, design is almost unlimited.

Herein, the term "comprising" is not limited to the particular elements mentioned, but also further elements could be included.

While preferred embodiments of the invention have been disclosed in detail, it should be understood by those skilled in the art that various other modifications may be made to the illustrated embodiments without departing from the scope of the invention as described in the specification and defined in the appended claims.

## Claims

1. Cover for electronic equipment, said cover (20) preferably comprising a front panel (25) and a rear panel (26), said cover (20) being removably attachable to a housing comprising functional components, for instance to enable communication to take place, wherein said cover (20) comprises joining means (30) including an elongate recess (31) on an outer surface of the cover (20) and an endless elastic wire-like locking member (32) adapted to run in said recess (31), said locking member (32) being arranged to join and/or attach the cover (20) by elastic force.

2. Cover according to claim 1, wherein the locking member (32) is an elastic wire, typically a rubber wire.

3. Cover according to claim 1, wherein the locking member (32) comprises theremoplastic polymer material.

4. Cover according to any one of the preceding claims, wherein the locking member (32) has a flattened out region comprising a label such as a logo type.

5. Cover according to any one of the preceding claims, wherein the material comprises colour particles.

6. Electronic equipment comprising a cover according to claim 1, wherein the recess (31) for the locking member (32) is provided in a loudspeaker region of the electronic equipment (10).

7. Electronic equipment, comprising a device according to claim 1, wherein the recess (31) for the locking member (32) is provided below a key-board (41) of the electronic equipment (10).

8. Electronic equipment according to claim 6 or 7, wherein the locking member (32) and/or the recess (31) is/are adapted so that the locking member (32) is closer attached to one of the panels (25, 26) to prevent that it is accidently lost when handling the electronic equipment (10).
